# EUROPEAN PATENT SPECIFICATION

(11) **EP 4 242 027 B1**
(45) Date of publication and mention of the grant of the patent: **29.10.2025**
(21) Application number: 22214332.3
(22) Date of filing: 16.12.2022
(51) Int. Cl.: B60H 1/32, B60W 10/06, B60W 10/30, B60W 30/09, B60W 30/188

(54) **REFRIGERATOR/FREEZER VEHICLE**
KÜHL-/GEFRIERFAHRZEUG
RÉFRIGÉRATEUR/CONGÉLATEUR

(30) Priority: 11.03.2022 JP 2022038358
(43) Date of publication of application: 13.09.2023
(73) Proprietor: Suzuki Motor Corporation, Hamamatsu-shi, Shizuoka 432-8611 (JP)
(72) Inventor: ISHII, Subaru, Hamamatsu-shi, Shizuoka, 432-8611 (JP)
(74) Representative: Haseltine Lake Kempner LLP

(56) References cited:
- EP-B1- 2 609 314
- EP-B1- 3 277 985
- DE-A1- 102018 119 933
- JP-B2- 6 075 575

## Description

### [Technical Field]

The present invention relates to a refrigerator/freezer vehicle, and more specifically, relates to a refrigerator/freezer vehicle having a false-start prevention function.

### [Background Art]

There is known a freezing vehicle that actuates a freezing cycle using engine output. For example, JP 4199380 B2 discloses a technology that makes it possible to continue the operation of a compression machine even when engine speed has decreased, by setting the frequency of an inverter to a higher value than a permissible value in the case in which engine rotation is a preset value or lower, in order to constantly obtain stable cooling performance.

Document EP 2 609 314 B1 discloses a stall mitigation technique for vehicles reducing the engine load when the vehicle is stationary and the engine speed is low and when the driver's foot approaches the accelerator pedal within a predetermined distance.

Document JP 6 075575 B2 discloses a system allowing to restrict the torque of a vehicle engine when a critical situation, that could lead to a stop of the vehicle, is detected, the detection being performed by taking into account the operation state of the accelerator pedal.

### [Summary of Invention]

### [Problem to be Solved by the Invention]

In a freezing vehicle, the influence on engine torque changes due to the setting temperature of the freezing chamber, or in a situation in which cooling capacity is required, for example, after the opening and closing of a door or immediately after a switch on-operation. Therefore, when a false-start prevention function is actuated in a state in which the engine torque has decreased due to the load of the freezing chamber, there is risk that the torque-down amount of the engine may become excessively large.

For example, when an accelerator pedal is mistakenly depressed in a situation in which a stopped vehicle is ahead and the false-start prevention function is actuated, in the case of an upward slope, a level of engine torque that allows the vehicle not to move rearward is necessary. However, when the torque-down amount of the engine is large due to the load of the freezing chamber, there is a risk that the vehicle will move rearward, and when the torque-down amount of the engine is set so as to be small as a measure against that, the false-start prevention effect can be impaired, depending on the situation.

The present invention has been made in view of the above circumstances, and an object thereof is to provide a freezing vehicle that makes it possible to obtain a stable false-start prevention effect regardless of the actuation situation of the refrigerating/freezing chamber.

### [Means for Solving the Problem]

For solving the above problem, the present invention according to claim 1 is
a refrigerator/freezer vehicle including:
an engine control unit to control an engine depending on torque demand; and
a refrigerating/freezing chamber to perform refrigeration or cooling by a compressor that is actuated by output of the engine,
the refrigerator/freezer vehicle having a function to suppress engine torque when an accelerator pedal is operated by a predetermined depression amount or more in a state in which an obstacle is detected within a predetermined distance in a movement direction at a predetermined low vehicle speed or lower, characterized in that
the refrigerator/freezer vehicle is configured to set a constant value or zero as a torque demand value to be allocated to the compressor, at time of actuation of the engine torque suppression function.

Alternatively, for solving the above problem, the present invention according to claim 2 is
a refrigerator/freezer vehicle including:
an engine control unit to control an engine depending on torque demand; and
a refrigerating/freezing chamber to perform refrigeration or cooling by a compressor that is actuated by output of the engine,
the refrigerator/freezer vehicle having a function to suppress engine torque when an accelerator pedal is operated by a predetermined depression amount or more in a state in which an obstacle is detected within a predetermined distance in a movement direction at a predetermined low vehicle speed or lower, characterized in that
the refrigerator/freezer vehicle is configured to set a constant value or zero as a torque demand value to be allocated to the compressor, after a lapse of a first predetermined time from satisfaction of an intervention condition for the engine torque suppression function.

### [Advantageous Effect of Invention]

The refrigerator/freezer vehicle according to the present invention sets a constant value or zero as the torque demand value to be allocated to the compressor of the refrigerating/freezing chamber at the time of the actuation of the engine torque suppression function or after a lapse of a first predetermined time from satisfaction of an intervention condition for the engine torque suppression function, as described above, and thereby, a stable false-start prevention effect can be expected regardless of the actuation situation of the refrigerating/freezing chamber.

### [Brief Description of Drawings]

[Figure 1] Figure 1 is a side view showing an outline of a refrigerator/freezer vehicle.
[Figure 2] Figure 2 is a block diagram showing a control system for the refrigerator/freezer vehicle.
[Figure 3] Figure 3 is a flowchart showing a false-start prevention control according to a first embodiment of the present invention.
[Figure 4] Figure 4 is a flowchart showing a false-start prevention control according to a second embodiment of the present invention.
[Figure 5] Figure 5 is a flowchart showing a false-start prevention control according to a third embodiment of the present invention.
[Figure 6] Figure 6 is a flowchart showing a false-start prevention control according to a fourth embodiment of the present invention.

### [Mode for Carrying Out the Invention]

Hereinafter, embodiments of the present invention will be described in detail with reference to the drawings.

### Basic Configuration of Refrigerator/freezer vehicle

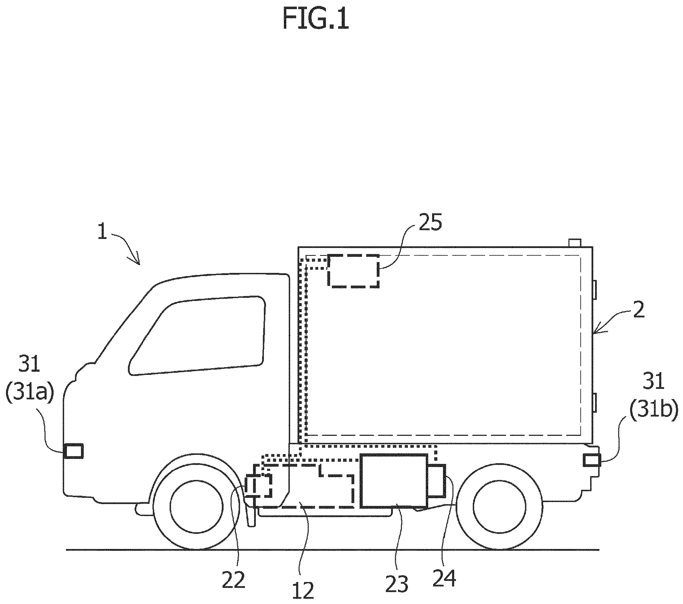

In Figure 1, a refrigerator/freezer vehicle 1 includes a refrigerating/freezing chamber 2 at a vehicle body rear portion of a cab-over type truck that is equipped with an internal combustion engine 12 on the lower side of a vehicle cabin. For example, the refrigerating/freezing chamber 2 is configured as a container having a heat insulation structure in which a heat insulation material is used, and includes an openable door at a rear portion, an openable door at a side surface, or an openable door at both a rear portion and at a side surface.

A freezing system of the refrigerating/freezing chamber 2 includes a compressor 22 that is driven by the dynamic power of the engine 12, a condenser 23 and receiver dryer 24 that are equipped at a lower portion of a side surface of a vehicle body rear portion, and an evaporator 25 that is disposed at a ceiling portion of the refrigerating/freezing chamber 2, and is configured to cool the chamber interior by joining them through pipes, circulating a refrigerant, and executing a freezing cycle (compression, condensation, expansion and evaporation).

The compressor 22 to compress the refrigerant is configured such that an electromagnetic clutch is attached to a pulley that is driven through a belt by the engine 12, the on and off control of the electromagnetic clutch is performed by a refrigerating/freezing chamber control unit 20 based on a chamber interior temperature that is detected by a temperature sensor provided in the refrigerating/freezing chamber 2, and thereby, the actuation and non-actuation (cooling on and off) of the compressor 22 is switched, so that the chamber interior is maintained in a predetermined temperature range.

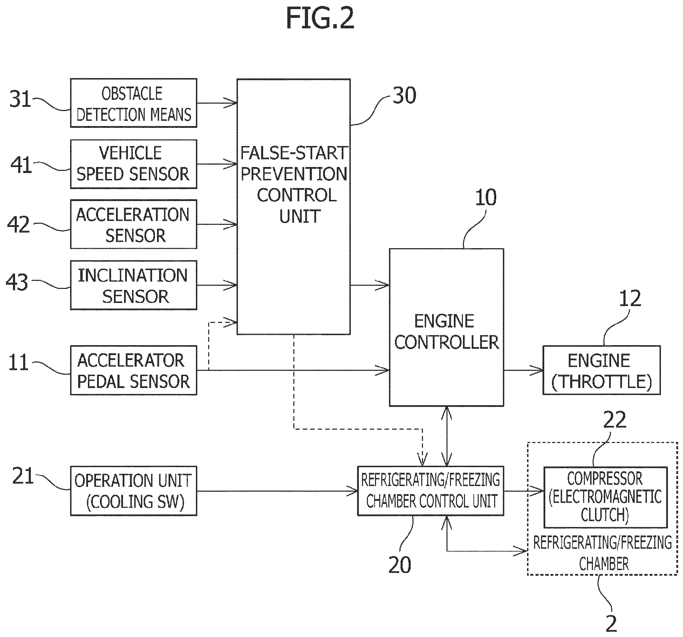

Figure 2 shows a control system for the refrigerator/freezer vehicle 1. When a cooling switch of an operation unit 21 (control panel) of the refrigerating/freezing chamber 2 is turned on in a state in which the engine 12 is actuated, the refrigerating/freezing chamber control unit 20 turns the electromagnetic clutch on to actuate the compressor 22, based on the setting temperature and the chamber interior temperature, and actuates a fan motor of the condenser 23 and a fan motor of the evaporator 25, so that the refrigerating/freezing chamber 2 enters an actuation state and the air within the chamber is cooled.

The refrigerator/freezer vehicle 1 includes an electronic control throttle system configured such that the opening degree (throttle motor) of a throttle valve of the engine 12 is controlled by an engine controller 10 depending on the amount (torque demand) an accelerator pedal is depressed that is detected by an accelerator pedal sensor 11. The engine controller 10 acquires various detection values indicating the operating state of the engine 12, and the traveling state of the vehicle, in addition to the amount the accelerator pedal is depressed, and optimally maintains the operating state of the engine 12.

For example, even when idling, when the on-operation of the cooling switch of the refrigerating/freezing chamber 2 is performed and the compressor 22 is actuated, the engine controller 10 controls the throttle opening degree such that the output of the engine 12 is an output corresponding to the load of the compressor 22, in response to the torque demand from the refrigerating/freezing chamber control unit 20. Furthermore, a torque demand value to be allocated to driver's accelerator operation (the accelerator pedal sensor 11) is reduced depending on a torque demand value to be allocated to the refrigerating/freezing chamber 2 (compressor 22), thereby, the output of the engine 12 is efficiently distributed for traveling and cooling.

### False-start Prevention Control

The refrigerator/freezer vehicle 1 having the above-described basic configuration includes a false-start prevention control unit 30 for executing a false-start prevention control. The false-start prevention control unit 30 acquires the distance to an obstacle that is detected by obstacle detection means 31, the vehicle speed that is detected by a vehicle speed sensor 41 (or a wheel speed sensor), and the amount the accelerator pedal is depressed that is detected by the accelerator pedal sensor 11, and based on these, determines whether an intervention condition for the false-start prevention control (engine torque suppression control) is satisfied.

That is, it is determined that the intervention condition for the false-start prevention control is satisfied, in the case in which a predetermined accelerator depression amount or greater is detected by the accelerator pedal sensor 11, in the state in which the vehicle speed detected by the vehicle speed sensor 41 is in a low speed range equal to or lower than a predetermined speed or the vehicle is stopped and in which an obstacle is detected by the obstacle detection means 31 within a predetermined distance in the movement direction.

In the case in which the intervention condition for the false-start prevention control is satisfied, the engine controller 10 restricts the accelerator opening degree and suppresses the engine torque based on a torque suppression command of the false-start prevention control unit 30, regardless of the stepping amount (torque demand) of the accelerator pedal.

Other than the above information, the false-start prevention control unit 30 acquires information such as the acceleration that is detected by an acceleration sensor 42, the inclination (road surface inclination) of the vehicle that is detected by an inclination sensor 43, and a selected gear stage of a transmission control unit (not shown).

For example, in the case in which the inclination is detected by the inclination sensor 43, the torque-down amount necessary to be suppressed is adjusted depending on the inclination direction and the inclination degree. Furthermore, during the actuation of the false-start prevention control, in the case in which an acceleration in the rearward movement direction is detected by the acceleration sensor 42, although the selected gear stage is not a rearward movement, the determination of a slide-down is made, the torque-down amount is adjusted so as to be small, and a creep torque for preventing the slide-down is maintained. As the inclination sensor 43, inclination sensors, acceleration sensors, multiaxial inertia sensors and the like that detect the inclination of the refrigerator/freezer vehicle 1 in the front-rear direction based on the gravitational acceleration can be used.

Preferably, the obstacle detection means 31 should include a forward obstacle sensor 31a that detects an obstacle positioned forward of the vehicle and a rearward obstacle sensor 31b that detects an obstacle positioned rearward of the vehicle as shown in Figure 1, and should be configured to selectively execute a false-start prevention control for the forward movement direction and a false-start prevention control for the rearward movement direction, depending on the selected gear stage information of the transmission control unit.

As the obstacle detection means 31, various sensors that can determine the existence or non-existence of the obstacle and the distance information about the obstacle, for example, an ultrasonic sensor, a millimeter wave radar and the like can be suitably used, or instead of, or in addition to them, a stereo camera and a LiDAR can be used.

The false-start prevention control unit 30 is configured as a computer (ECU) constituted by a ROM that contains control programs, setting data and the like for executing the above controls, a RAM that temporarily stores arithmetic processing results, a CPU that performs arithmetic processing, a communication I/F and the like, and can acquire each detection information through an in-vehicle network.

The refrigerator/freezer vehicle 1 needs to drive the compressor 22 at a high rotation, due to the setting temperature of the refrigerating/freezing chamber 2, or in a situation in which cooling capacity is required, for example, after the opening and closing of a door or immediately after a cooling switch on-operation, and therefore, the torque demand value from the refrigerating/freezing chamber control unit 20 to the engine controller 10 increases. Therefore, when the false-start prevention control (engine torque suppression control) is executed in a state in which the engine torque has decreased due to the load of the compressor 22, there is risk that the torque-down amount of the engine 12 will be excessively large.

### Improved False-start Prevention Control

Hence, the false-start prevention control unit 30 of the refrigerator/freezer vehicle 1 according to the present invention is configured to be set a constant value or zero as the torque demand value to be allocated to the compressor 22 of the refrigerating/freezing chamber 1 in the engine controller 10, at the time when the intervention condition for the false-start prevention control is satisfied or after a lapse of a first predetermined time from satisfaction of the intervention condition for the false-start prevention control. Some embodiments of the improved false-start prevention control will be described below with reference to the drawings.

### First Embodiment

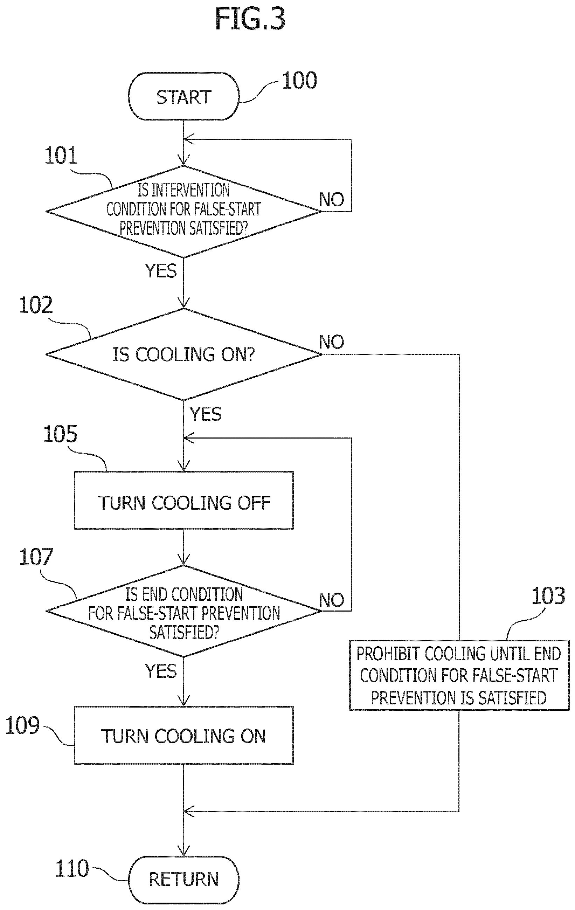

Figure 3 is a flowchart showing a false-start prevention control according to a first embodiment. The false-start prevention control is started in a state in which the engine 12 of the refrigerator/freezer vehicle 1 is actuated (step 100), and the false-start prevention control unit 30 monitors the vehicle speed that is detected by the vehicle speed sensor 41 (or the wheel speed sensor), the distance to the obstacle that is detected by the obstacle detection means 31, and the amount the accelerator pedal is depressed that is detected by the accelerator pedal sensor 11 (step 101).

At the time when a predetermined accelerator depression amount or greater is detected in a state in which the vehicle speed is in the low speed range equal to, or lower than, the predetermined speed, or the vehicle is stopped, and the obstacle is detected within the predetermined distance in the movement direction, and when it is determined that the intervention condition for the false-start prevention control is satisfied (step 101; YES), if the compressor 22 of the refrigerating/freezing chamber 2 is in the stop state (cooling off) (step 102; NO), the actuation of the compressor 22 is prohibited until an end condition for the false-start prevention control is satisfied (step 103).

On the other hand, if the compressor 22 of the refrigerating/freezing chamber 2 is in the actuation state (cooling on) (step 102; YES) at the time when it is determined that the intervention condition for the false-start prevention control is satisfied, the refrigerating/freezing chamber control unit 20 disengages the electromagnetic clutch of the compressor 22, and stops the compressor 22 (cooling off) (step 105).

At the same time, the engine controller 10 sets zero as the torque demand value to be allocated to the compressor 22. Then, the engine controller 10 decides the torque-down amount of the engine 12 by referring to the inclination degree that is detected by the inclination sensor 43, as necessary, and restricts the accelerator opening degree to suppress the engine torque.

For example, when it is determined in the false-start prevention control unit 30 that the intervention condition for the false-start prevention control is satisfied, a false-start prevention control actuation flag is turned on, and the engine controller 10 sets zero as the torque demand value to be allocated to the compressor 22, so that the refrigerating/freezing chamber control unit 20 stops the compressor 22. Alternatively, when the false-start prevention control actuation flag is turned on, the refrigerating/freezing chamber control unit 20 stops the compressor 22, and at the same time, sets zero as the torque demand to the engine controller 10.

The false-start prevention control unit 30 continues to monitor the intervention condition for the false-start prevention control even during the actuation of the engine torque suppression control (false-start prevention control) by the engine controller 10, the torque demand value to be allocated to the compressor 22 is maintained at zero while the false-start prevention control actuation flag is in the on-state, and the refrigerating/freezing chamber control unit 20 maintains the compressor 22 in the stop state (cooling off).

Thereafter, in the case in which the intervention condition for the false-start prevention control is not satisfied and in which the end condition for the false-start prevention control is satisfied (step 107; YES), for example, in the case in which the driver returns the accelerator pedal, the false-start prevention control actuation flag is turned off, and the refrigerating/freezing chamber control unit 20 engages the electromagnetic clutch and places the compressor 22 into the actuation state (cooling on) (step 109).

By executing the above control, the engine controller 10 can decide a proper torque-down amount based on the state of the vehicle, in a state in which there is no load of the compressor 22, regardless of the actuation state of the refrigerating/freezing chamber 2 at the time of the actuation of the false-start prevention control, and can execute a precise false-start prevention control. Although the actuation of the refrigerating/freezing chamber 2 is stopped during the period, no great effect is exerted on the cooling state in the case of a short-time stop. There is an advantage in that it is possible to execute, at low cost, a control matching actual circumstances in which the occurrence frequency of the false-start prevention control is low but the priority is high.

It is allowable to adopt a configuration in which the electromagnetic clutch of the compressor 22 is engaged after a lapse of a predetermined time (second predetermined time; about 1 minute) in the case in which the end condition for the false-start prevention control is satisfied (step 107; YES) after the intervention condition for the false-start prevention control is satisfied and the electromagnetic clutch of the compressor 22 is disengaged. This configuration has an advantage in that the burden on the compressor is reduced and a long life can be achieved.

### Second Embodiment

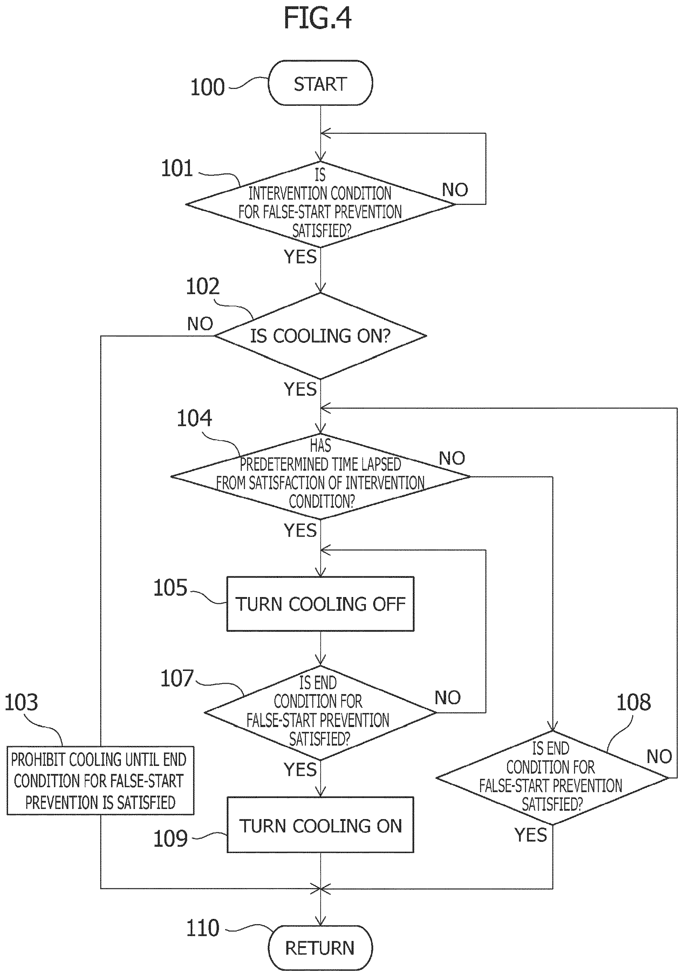

Figure 4 is a flowchart showing a false-start prevention control according to a second embodiment. The basic flow is the same as that in the first embodiment, and therefore, modifications will be described below.

The above-described first embodiment shows a case in which the compressor 22 of the refrigerating/freezing chamber 2 is immediately stopped (cooling off) when the compressor 22 is actuated (cooling on) at the time when the intervention condition for the false-start prevention control is satisfied (step 102; YES). In the second embodiment shown in Figure 4, after a lapse of a predetermined time (first predetermined time) from the satisfying of the intervention condition for the false-start prevention control (step 104; YES), the engine controller 10 sets zero as the torque demand value to be allocated to the compressor 22, and the refrigerating/freezing chamber control unit 20 disengages the electromagnetic clutch of the compressor 22 and stops (cooling off) the compressor 22 (step 105).

In this case, at the time when the intervention condition for the false-start prevention control is satisfied, the engine controller 10 decides the torque-down amount while maintaining the compressor 22 in the actuation state (accordingly in consideration of the torque demand (load) for the compressor 22), and executes the engine torque suppression control, so that the torque-down amount is small until the predetermined time lapses.

Thereafter, at such a timing (for example, 0.5 to 2 seconds) that the refrigerator/freezer vehicle 1 does not collide with the obstacle (or the refrigerator/freezer vehicle 1 does not move over a wheel chock), zero is set as the torque demand value to be allocated to the compressor 22, and the engine torque is further suppressed, resulting in the transition to a stronger false-start prevention control.

By this control, in the case in which the end condition for the false-start prevention control is satisfied (step 108; YES), for example, in the case in which the driver performs accelerator-off before the lapse of the predetermined time, the false-start prevention control is ended at that time point, and the refrigerating/freezing chamber 2 (compressor 22) is maintained in the actuation state (cooling on). Accordingly, there is an advantage in that it is possible to perform a practical false-start prevention while reducing the effects on the cooling performance of the refrigerating/freezing chamber 2.

### Third Embodiment

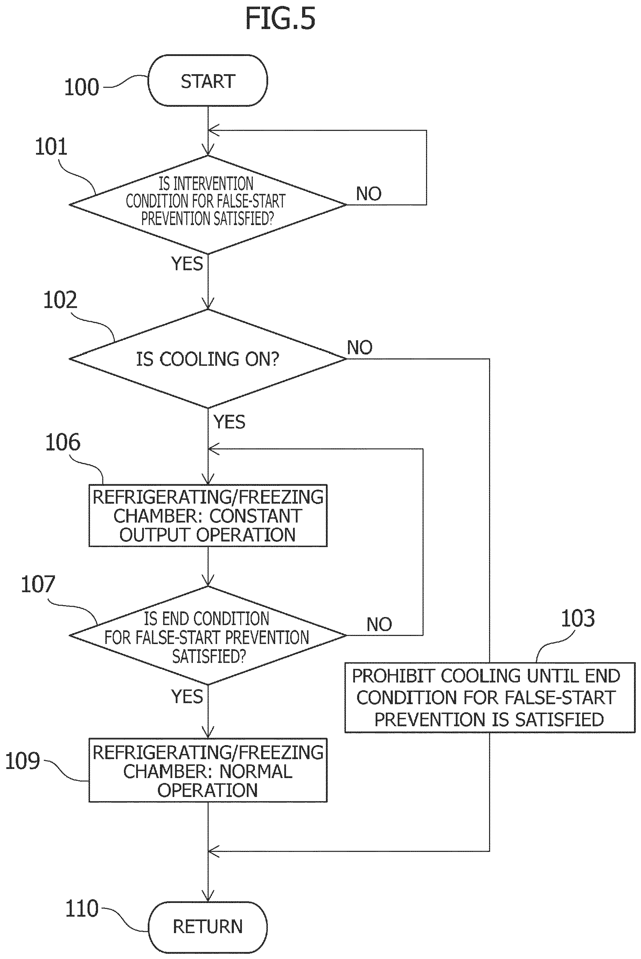

Figure 5 is a flowchart showing a false-start prevention control according to a third embodiment. The basic flow is the same as that in the first embodiment, and therefore, modifications will be described below.

The above-described first embodiment shows a case in which the compressor 22 of the refrigerating/freezing chamber 2 is stopped (cooling off) when the compressor 22 is actuated (cooling on) at the time when the intervention condition for the false-start prevention control is satisfied (step 102; YES). In the third embodiment shown in Figure 5, the engagement of the electromagnetic clutch of the compressor 22 is maintained, and the engine controller 10 sets a constant value instead of zero, as the torque demand value to be allocated to the compressor 22, so that the refrigerating/freezing chamber 2 transitions to a constant output operation (step 106).

In this case, at the time when the intervention condition for the false-start prevention control is satisfied, the engine controller 10 decides the torque-down amount while maintaining the compressor 22 in the actuation state (accordingly in consideration of the torque demand (load) of the compressor 22), and executes the engine torque suppression control, so that the torque-down amount is smaller compared to the case of the stop of the compressor 22.

However, even when the cooling request is thereafter performed during the false-start prevention control because of the temperature change in the refrigerating/freezing chamber 2 or the like, the torque demand value to be allocated to the compressor 22 is maintained at the constant value, and therefore, the torque variation that is caused by the cooling request is avoided, so that it is possible to perform a stable false-start prevention control.

Furthermore, during the actuation of the false-start prevention control, the actuation of the compressor 22 is continued even though the compressor 22 is maintained at a low rotation, and therefore, there is an advantage in that a better cooling state of the refrigerating/freezing chamber 2 is maintained compared to the case of the stop of the compressor 22.

Thereafter, in the case in which the end condition for the false-start prevention control is satisfied due to the accelerator-off by the driver or the like (step 107; YES), the false-start prevention control actuation flag is turned off, and the engine controller 10 transitions to a normal operation in which the torque demand value is allocated to the compressor 22 in accordance with the torque demand of the refrigerating/freezing chamber control unit 20 (step 109).

### Fourth Embodiment

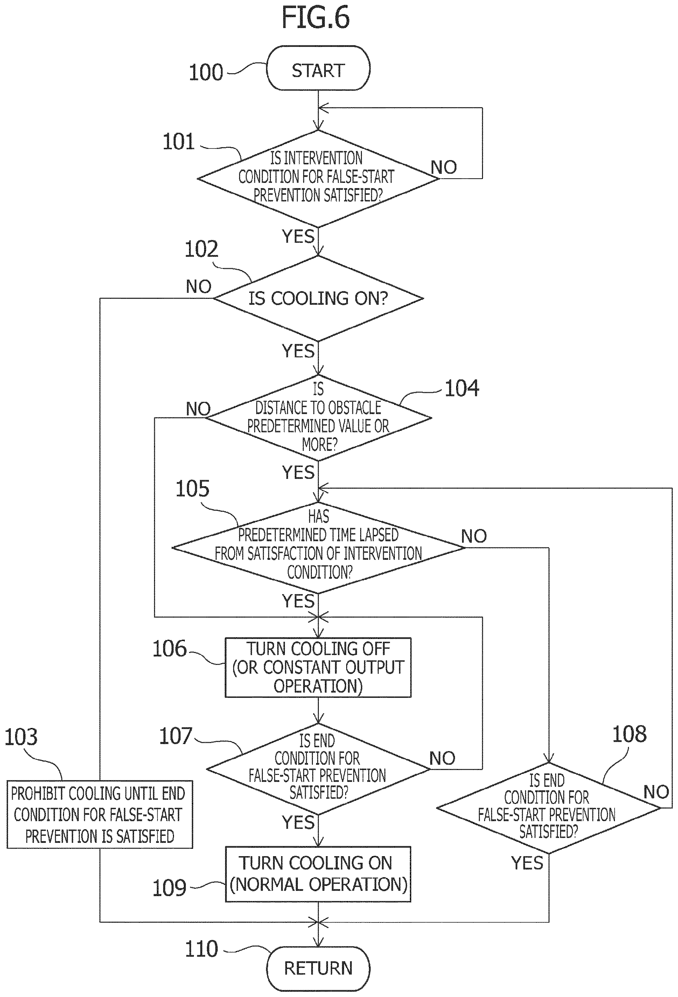

Figure 6 is a flowchart showing a false-start prevention control according to a fourth embodiment. The basic flow is the same as that in the second embodiment shown in Figure 4, and therefore, the changes will be described.

In the false-start prevention control according to the fourth embodiment, when the compressor 22 of the refrigerating/freezing chamber 2 is actuated (cooling on) at the time when the intervention condition for the false-start prevention control is satisfied (step 102; YES), the control is switched depending on the distance to the obstacle that is detected by the obstacle detection means 31.

That is, when the distance to the obstacle is a predetermined value or greater (step 104; YES), the measurement of a predetermined time (first predetermined time) is started after the intervention condition for the false-start prevention control is satisfied, and after a lapse of the predetermined time (step 105; YES), zero is set as the torque demand value to be allocated to the compressor 22, to stop the compressor 22 (cooling off), or a constant value is set as the torque demand value to be allocated to the compressor 22, to transition to the constant output operation (step 106).

In this case, at the time when the intervention condition for the false-start prevention control is satisfied, the engine controller 10 decides the torque-down amount while maintaining the compressor 22 in the actuation state (in consideration of the torque demand (load) of the compressor 22), and executes the engine torque suppression control, so that the torque-down amount is small until the predetermined time lapses.

Thereafter, at such a timing (for example, 0.5 to 2 seconds) that the refrigerator/freezer vehicle 1 does not collide with the obstacle (or the refrigerator/freezer vehicle 1 does not move over a wheel chock), zero is set as the torque demand value to be allocated to the compressor 22, and the engine torque is further suppressed, resulting in the transition to a stronger false-start prevention control.

Furthermore, in the case in which the end condition for the false-start prevention control is satisfied (step 108; YES), for example, in the case in which the driver performs accelerator-off before the lapse of the predetermined time, the false-start prevention control is ended, and the refrigerating/freezing chamber 2 (compressor 22) is maintained in the actuation state.

On the other hand, when the distance to the obstacle is less than the predetermined value (step 104; NO), immediately after the intervention condition for the false-start prevention control is satisfied, zero is set as the torque demand value to be allocated to the compressor 22, to stop the compressor 22 (cooling off), or the constant value is set as the torque demand value to be allocated to the compressor 22, to transition to the constant output operation (step 106).

By switching the control of the refrigerating/freezing chamber 2 depending on the distance to the obstacle as described above, it is possible to avoid the collision with the obstacle due to the false-start, and to reduce the influence on the cooling performance of the refrigerating/freezing chamber 2.

The torque at the time of the freezing chamber actuation with the above predetermined time (first predetermined time) and at the time of the actuation of the false-start prevention control is set to such a high torque that the slide-down does not occur even by the influence of the freezing chamber actuation, and thereby, it is possible to avoid the compressor 22 of the refrigerating/freezing chamber 2 from being immoderately stopped, or to avoid cold holding performance from being decreased.

Furthermore, it is allowable to adopt a configuration in which the above predetermined time (first predetermined time) is dynamically set depending on the distance to the obstacle that is detected by the obstacle detection means 31. That is, the above predetermined time (first predetermined time) is set so as to be longer as the distance to the obstacle is longer, and is set so as to be shorter as the distance to the obstacle is shorter, and thereby, there is an advantage in achieving both the false-start prevention performance and the cooling performance.

Although some embodiments of the present invention have been described above, the present invention is not limited to the above-described embodiments, and further various modifications and changes are possible within the scope of the claims.

### [Reference Signs List]

- 1: Refrigerator/freezer vehicle
- 2: Refrigerating/freezing chamber
- 10: Engine controller
- 11: Accelerator pedal sensor
- 12: Engine
- 20: Refrigerating/freezing chamber control unit
- 21: Operation unit
- 22: Compressor
- 23: Condenser
- 24: Receiver drier
- 25: Evaporator
- 30: False-start prevention control unit
- 31: Obstacle detection sensor
- 41: Vehicle speed sensor
- 42: Acceleration sensor
- 43: Inclination sensor

## Claims

1. A refrigerator/freezer vehicle (1) comprising:
an engine control unit (10) to control an engine (12) depending on torque demand;
and
a refrigerating/freezing chamber (2) to perform cooling by a compressor (22) that is actuated by output of the engine (12),
the refrigerator/freezer vehicle (1) having a function (30) to suppress engine torque when an accelerator pedal (11) is operated by a predetermined depression amount or more in a state in which an obstacle is detected within a predetermined distance in a movement direction at a predetermined low vehicle speed or lower, **characterized in that**
the refrigerator/freezer vehicle (1) is configured to set a constant value or zero as a torque demand value to be allocated to the compressor (22), at time of actuation of the engine torque suppression function (30).

2. A refrigerator/freezer vehicle (1) comprising:
an engine control unit (10) to control an engine (12) depending on torque demand;
and
a refrigerating/freezing chamber (2) to perform cooling by a compressor (22) that is actuated by output of the engine (12),
the refrigerator/freezer vehicle (1) having a function (30) to suppress engine torque when an accelerator pedal (11) is operated by a predetermined depression amount or more in a state in which an obstacle is detected within a predetermined distance in a movement direction at a predetermined low vehicle speed or lower, **characterized in that**
the refrigerator/freezer vehicle (1) is configured to set a constant value or zero as a torque demand value to be allocated to the compressor (22), after a lapse of a first predetermined time from satisfaction of an intervention condition for the engine torque suppression function (30).

3. The refrigerator/freezer vehicle (1) according to claim 2, wherein the first predetermined time is dynamically set depending on a distance to the obstacle, and is set so as to be longer as the distance to the obstacle is longer.

4. The refrigerator/freezer vehicle (1) according to any one of claims 1 to 3, wherein the compressor (22) is stopped when zero is set as the torque demand value to be allocated to the compressor (22).

5. The refrigerator/freezer vehicle (1) according to claim 4, wherein the refrigerator/freezer vehicle (1) is configured to engage the clutch after a lapse of a second predetermined time, when an end condition for the engine torque suppression function (30) is satisfied after the stop of the compressor (22).

6. The refrigerator/freezer vehicle (1) according to any one of claims 1 to 5, wherein the refrigerator/freezer vehicle (1) is configured to prohibit the actuation of the compressor (22) until an end condition for the engine torque suppression function (30) is satisfied, when the compressor (22) is in a stop state at the time of the actuation of the engine torque suppression function (30).

## Patentansprüche

1. Kühl-/Gefrierfahrzeug (1), umfassend:
eine Motorsteuereinheit (10), um einen Motor (12) in Abhängigkeit eines Drehmomentbedarfs zu steuern; und
eine Kühl-/Gefrierkammer (2), um eine Kühlung durch einen Kompressor (22) durchzuführen, der durch eine Leistungsausgabe des Motors (12) betätigt wird,
wobei das Kühl-/Gefrierfahrzeug (1) eine Funktion (30) aufweist, um das Motordrehmoment zu unterdrücken, wenn ein Gaspedal (11) um ein vorbestimmtes Ausmaß des Herabdrückens oder mehr in einem Zustand betätigt wird, in dem ein Hindernis innerhalb einer vorbestimmten Entfernung in einer Bewegungsrichtung bei einer vorbestimmten niedrigen Fahrzeuggeschwindigkeit oder darunter erfasst wird, **dadurch gekennzeichnet, dass**
das Kühl-/Gefrierfahrzeug (1) dazu konfiguriert ist, zum Zeitpunkt der Betätigung der Motordrehmoment-Unterdrückungsfunktion (30) einen konstanten Wert oder Null als einen dem Kompressor (22) zuzuweisenden Drehmomentbedarfswert festzulegen.

2. Kühl-/Gefrierfahrzeug (1), umfassend:
eine Motorsteuereinheit (10), um einen Motor (12) in Abhängigkeit eines Drehmomentbedarfs zu steuern; und
eine Kühl-/Gefrierkammer (2), um eine Kühlung durch einen Kompressor (22) durchzuführen, der durch eine Leistungsausgabe des Motors (12) betätigt wird,
wobei das Kühl-/Gefrierfahrzeug (1) eine Funktion (30) aufweist, um das Motordrehmoment zu unterdrücken, wenn ein Gaspedal (11) um ein vorbestimmtes Ausmaß des Herabdrückens oder mehr in einem Zustand betätigt wird, in dem ein Hindernis innerhalb einer vorbestimmten Entfernung in einer Bewegungsrichtung bei einer vorbestimmten niedrigen Fahrzeuggeschwindigkeit oder darunter erfasst wird, **dadurch gekennzeichnet, dass**
das Kühl-/Gefrierfahrzeug (1) dazu konfiguriert ist, nach Ablauf einer ersten vorbestimmten Zeit seit Erfüllung einer Interventionsbedingung für die Motordrehmoment-Unterdrückungsfunktion (30) einen konstanten Wert oder Null als einen dem Kompressor (22) zuzuweisenden Drehmomentbedarfswert festzulegen.

3. Kühl-/Gefrierfahrzeug (1) nach Anspruch 2, wobei die erste vorbestimmte Zeit dynamisch in Abhängigkeit von einer Entfernung zu dem Hindernis festgelegt und so festgelegt wird, dass sie länger ist, wenn die Entfernung zu dem Hindernis größer ist.

4. Kühl-/Gefrierfahrzeug (1) nach einem der Ansprüche 1 bis 3, wobei der Kompressor (22) gestoppt wird, wenn Null als der dem Kompressor (22) zuzuweisende Drehmomentbedarfswert festgelegt ist.

5. Kühl-/Gefrierfahrzeug (1) nach Anspruch 4, wobei das Kühl-/Gefrierfahrzeug (1) dazu konfiguriert ist, die Kupplung nach Ablauf einer zweiten vorbestimmten Zeit einzurücken, wenn eine Endbedingung für die Motordrehmoment-Unterdrückungsfunktion (30) nach dem Stopp des Kompressors (22) erfüllt ist.

6. Kühl-/Gefrierfahrzeug (1) nach einem der Ansprüche 1 bis 5, wobei das Kühl-/Gefrierfahrzeug (1) dazu konfiguriert ist, die Betätigung des Kompressors (22) zu verhindern, bis eine Endbedingung für die Motordrehmoment-Unterdrückungsfunktion (30) erfüllt ist, wenn der Kompressor (22) zum Zeitpunkt der Betätigung der Motordrehmoment-Unterdrückungsfunktion (30) in einem Stoppzustand ist.

## Revendications

1. Véhicule frigorifique/congélateur (1) comprenant :
une unité de commande de moteur (10) conçue pour commander un moteur (12) en fonction de la demande de couple ; et
une chambre de réfrigération/congélation (2) destinée à effectuer un refroidissement au moyen d'un compresseur (22) qui est actionné par la puissance issue du moteur (12),
le véhicule frigorifique/congélateur (1) ayant une fonction (30) de suppression du couple moteur, lorsqu'une pédale d'accélérateur (11) est actionnée d'au moins une valeur prédéterminée ou plus, dans un état où un obstacle est détecté à une distance prédéterminée dans la direction de déplacement, à une vitesse inférieure ou égale à une valeur faible prédéterminée de véhicule, **caractérisé en ce que**
le véhicule réfrigérateur/congélateur (1) est configuré pour définir une valeur constante ou nulle en tant que valeur de demande de couple à attribuer au compresseur (22), au moment de l'actionnement de la fonction de suppression de couple moteur (30).

2. Véhicule frigorifique/congélateur (1) comprenant :
une unité de commande de moteur (10) conçue pour commander un moteur (12) en fonction de la demande de couple ; et
une chambre de réfrigération/congélation (2) destinée à effectuer un refroidissement au moyen d'un compresseur (22) qui est actionné par la puissance issue du moteur (12),
le véhicule frigorifique/congélateur (1) ayant une fonction (30) de suppression du couple moteur, lorsqu'une pédale d'accélérateur (11) est actionnée d'au moins une valeur prédéterminée ou plus, dans un état où un obstacle est détecté à une distance prédéterminée dans la direction de déplacement, à une vitesse inférieure ou égale à une valeur faible prédéterminée de véhicule, **caractérisé en ce que**
le véhicule frigorifique/congélateur (1) est configuré pour définir une valeur constante ou nulle en tant que valeur de demande de couple à attribuer au compresseur (22), après un premier laps de temps prédéterminé à partir de la satisfaction d'une condition d'intervention pour la fonction de suppression du couple moteur (30).

3. Véhicule frigorifique/congélateur (1) selon la revendication 2, dans lequel le premier laps de temps prédéterminé est réglé de manière dynamique en fonction d'une distance à l'obstacle, et est défini de manière à être plus long lorsque la distance à l'obstacle est plus longue.

4. Véhicule frigorifique/congélateur (1) selon l'une quelconque des revendications 1 à 3, dans lequel le compresseur (22) est arrêté lorsque la valeur de demande de couple à attribuer au compresseur (22) est définie à zéro.

5. Véhicule frigorifique/congélateur (1) selon la revendication 4, dans lequel le véhicule frigorifique/congélateur (1) est configuré pour entrer en prise avec l'embrayage après un deuxième laps de temps prédéterminé, lorsqu'une condition de fin de la fonction de suppression de couple moteur (30) est satisfaite après l'arrêt du compresseur (22).

6. Véhicule frigorifique/congélateur (1) selon l'une quelconque des revendications 1 à 5, dans lequel le véhicule frigorifique/congélateur (1) est configuré pour interdire l'actionnement du compresseur (22) jusqu'à ce qu'une condition de fin de la fonction de suppression de couple moteur (30) soit satisfaite, lorsque le compresseur (22) est à l'arrêt au moment de l'actionnement de la fonction de suppression de couple moteur (30) .
